# EUROPÄISCHE PATENTSCHRIFT

(11) **EP 0 414 930 B1**
(45) Veröffentlichungstag und Bekanntmachung des Hinweises auf die Patenterteilung: **15.12.1993**
(21) Anmeldenummer: 89115858.6
(22) Anmeldetag: 28.08.1989
(51) Int. Cl.: H04L 12/56, H04L 29/06

(54) **Verfahren und Schaltungsanordnung zum Verhindern des Fehlleitens von auf Zubringerleitungen übertragenen Nachrichtenblöcken über eine Blockvermittlungsanlage**
Method and circuit arrangement for preventing misrouting of data blocks received on incoming lines via a block exchange
Procédé et agencement de circuit pour éviter le routage erroné de blocs de données transmis par des lignes d'entrée à travers un central de commutation de blocs

(43) Veröffentlichungstag der Anmeldung: 06.03.1991
(73) Patentinhaber: SIEMENS AKTIENGESELLSCHAFT, 80333 München (DE)
(72) Erfinder: Danner, Gerd, Dipl.-Phys., D-8000 München 21 (DE); Peter, Rau, Dr.-Dipl.-Phys., D-8000 München 60 (DE)

(56) Entgegenhaltungen:
- I.E.E.E. JOURNAL ON SELECTED AREAS IN COMMUNICATIONS, Band 6, Nr. 9, Dezember 1988, IEEE, New York, US; H. SUZUKI et al.: "Very high-speed and high-capacity packet switching for broadband ISDN"
- INTERNATIONAL SWITCHING SYMPOSIUM, Florence, IT, 7.-11. Mai 1984, Teil 2, Session 41B, Paper 4, Seiten 1-4, North-Holland, Amsterdam, NL; L.A. RONNINGEN: "Architecture of a very fast packet switch"

## Beschreibung

Die Erfindung betrifft ein verfahren und eine Schaltungsanordnung zum Verhindern des Fehlleitens von auf Zubringerleitungen im Zuge von virtuellen Verbindungen nach einem asynchronen Transfermodus übertragenen, jeweils einen die jeweilige virtuelle Verbindung bezeichnenden Blockkopf aufweisenden Nachrichtenblöcken über eine Blockvermittlungsanlage zu mit dieser verbundenen Abnehmerleitungen hin.

Im Zusammenhang mit nach einem asynchronen Transfermodus arbeitenden Vermittlungsnetzen ist es bereits für das Erkennen von durch Übertragungsstörungen hervorgerufenen Fehlleitungen von Nachrichtenpaketen bekannt ("Der Fernmelde-Ingenieur", 41. Jahrgang, 1987, Heft 9, Seiten 7 und 8), die in den Paketköpfen jeweils enthaltenen Informationen derart zu codieren, daß anhand dieser Codierung eine Fehlererkennung bzw. Fehlerkorrektur möglich ist. Die Paketköpfe ankommender Nachrichtenpakete werden dabei vor einer Vermittlung durch eine Paketvermittlungsanlage auf das vorliegen von Übertragungsfehlern überprüft. Bei Auftreten eines Übertragungsfehlers wird dieser je nach der Fehlerart korrigiert oder das jeweilige Nachrichtenpaket vollständig entfernt.

Es ist nun Aufgabe der vorliegenden Erfindung, ein Weg zu zeigen, wie bei einem Verfahren und einer Schaltungsanordnung der eingangs genannten Art mit einem geringen Steuerungsaufwand Fehlleitungen von Nachrichtenblöcken vermieden werden können.

Gelöst wird diese Aufgabe bei einem Verfahren der eingangs genannten Art durch die im kennzeichnenden Teil des Patentanspruches 1 angegebenen Verfahrensmerkmale.

Die Erfindung bringt den Vorteil mit sich, daß durch das Vorsehen einer verbindungsindividuellen Zusatzkennung für die einzelnen über eine Blockvermittlungsanlage übertragenen Nachrichtenblöcke mit einem geringen Steuerungsaufwand Fehlleitungen verhindert werden können, ohne eine beim Stand der Technik erforderliche spezielle Codierung der Blockköpfe von Nachrichtenblöcken vornehmen zu müssen.

Vorteilhafte alternative Ausgestaltungen des Verfahrens gemäß der vorliegenden Erfindung in bezug auf die Festlegung der den einzelnen Nachrichtenblöcken beigefügten Zusatzkennung ergeben sich aus den Patentansprüchen 2 bis 7. Der Vorteil dieser Ausgestaltungen besteht dabei in dem besonders geringen Steuerungsaufwand für die Festlegung von Zusatzkennungen.

Die vorstehend aufgezeigte Aufgabe wird bei einer Schaltungsanordnung der eingangs genannten Art durch die im kennzeichnenden Teil des Patentanspruches 8 angegebenen schaltungstechnischen Merkmale gelöst. Der Vorteil einer solchen Schaltungsanordnung liegt dabei darin, daß durch das Vorhandensein von Behandlungseinrichtungen und Auswerteeinrichtung lediglich an den Schnittstellen zu Zubringerleitungen bzw. Abnehmerleitungen hin mit einem geringen zusätzlichen schaltungstechnischen Aufwand Fehlleitungen von Nachrichtenblöcken vermieden werden können, ohne daß in den einzelnen Koppeleinrichtungen einer Blockvermittlungsanlage spezielle Überwachungseinrichtungen erforderlich sind.

Eine einen besonders geringen schaltungstechnischen Aufwand erfordernde Ausgestaltung der Schaltungsanordnung gemäß der vorliegenden Erfindung ergibt sich aus dem Patentanspruch 9.

Im folgenden wird nun die Erfindung anhand von Zeichnungen beispielsweise näher erläutert.
FIG 1 zeigt ein Blockschaltbild einer Blockvermittlungsanlage, bei der die Erfindung angewandt ist,
FIG 2 zeigt einen möglichen Aufbau der in FIG 1 lediglich schematisch dargestellten Behandlungseinrichtungen und
FIG 3 zeigt einen möglichen Aufbau der in FIG 1 lediglich schematisch dargestellten Auswerteeinrichtungen.

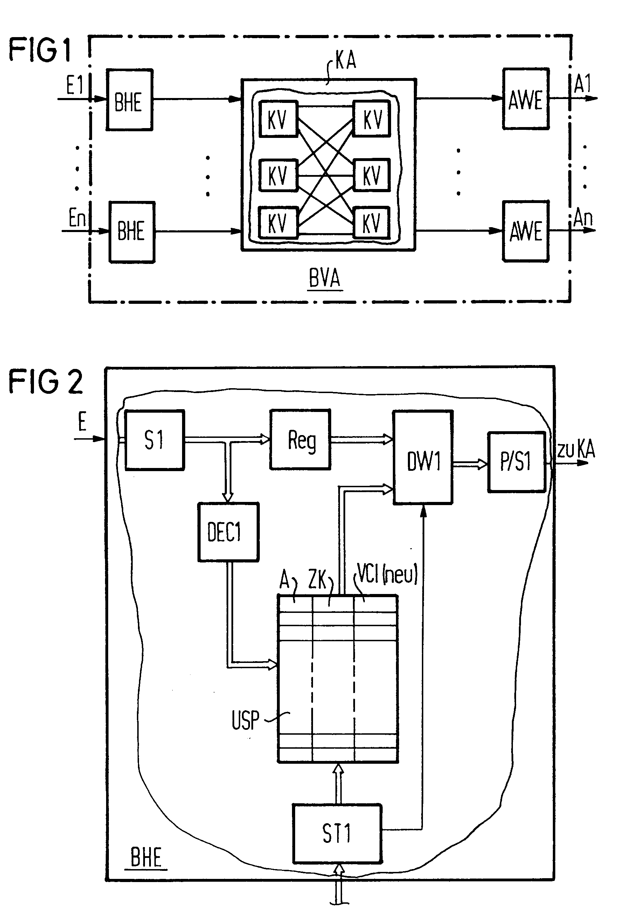

In FIG 1 ist eine Blockvermittlungsanlage BVA schematisch dargestellt, an welche eine Mehrzahl von Zubringerleitungen E1 bis En sowie eine Mehrzahl von Abnehmerleitungen A1 bis An angeschlossen sind. Von diesen sind in FIG 1 lediglich die Zubringerleitungen E1 und En und die Abnehmerleitungen A1 und An angegeben. Auf den Zubringerleitungen und Abnehmerleitungen erfolgt jeweils eine Übertragung von Nachrichtenpaketen im Zuge von virtuellen Verbindungen nach einem asynchronen Übertragungsverfahren ("Asynchronous Transfer Mode"). Bei den Nachrichtenblöcken möge es sich um Blöcke fester Länge handeln, welche jeweils über einen Blockkopf mit die jeweilige virtuelle Verbindung bezeichnenden Angaben sowie einen Informationsteil verfügen. In dem Informationsteil erfolgt die Übertragung der eigentlichen Nachrichtensignale. Unter Nachrichtensignalen sollen dabei Daten- und Textsignale sowie Sprach- bzw. Bildsignale in digitaler Form verstanden werden.

Wie aus FIG 1 hervorgeht, ist jeder der Zubringerleitungen E1 bis En eine Behandlungseinrichtung BHE zugeordnet. Eine solche Behandlungseinrichtung, auf deren Aufbau im folgenden noch näher eingegangen wird, nimmt die über die zugeordnete Zubringerleitung übertragenen Nachrichtenblöcke auf und fügt diesen vor einer Weiterleitung an eine Koppelanordnung KA der Blockvermittlungsanlage jeweils eine für die jeweilige virtuelle Verbindung im Zuge des Verbindungsaufbaues festgelegte Zusatzkennung bei. Für die Koppelanordnung KA ist im übrigen in FIG 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benutzt sein. Da der Aufbau und die wirkungsweise solcher Koppelanordnungen bereits bekannt ist, wird im folgenden darauf nicht näher eingegangen.

Ausgänge der Koppelanordnung KA sind jeweils über eine Auswerteeinrichtung AWE mit den bereits genannten Abnehmerleitungen A1 bis An verbunden. Eine solche Auswerteeinrichtung übernimmt die über die Koppelanordnung KA ihr zugeführten Nachrichtenblöcke und gibt durch ein im folgenden noch näher erläutertes Auswerten der den Nachrichtenblöcken jeweils beigefügten Zusatzkennung lediglich solche Nachrichtenblöcke an die zugeordnete Abnehmerleitung ab, deren beigefügte Zusatzkennung mit der für die jeweilige virtuelle Verbindung festgelegten Zusatzkennung übereinstimmt.

In FIG 2 ist ein möglicher Aufbau der zuvor erwähnten Behandlungseinrichtungen BHE dargestellt. Dabei sind lediglich diejenigen Schaltungsteile angegeben, die für das Verständnis der vorliegenden Erfindung erforderlich sind.

Mit der jeweiligen Zubringerleitung, die in FIG 2 mit E bezeichnet ist, ist eine Schnittstelleneinrichtung S1 verbunden, welche einerseits den Beginn von Nachrichtenblöcken erkennt und andererseits in über die Zubringerleitung in serieller Form zugeführten Nachrichtenblöcken jeweils auftretende Bits zu Bitgruppen mit jeweils einer festgelegten Anzahl von Bits, beispielsweise 8 Bits, zusammenfaßt und die einzelnen Bitgruppen (Oktetts) in paralleler Form bereitstellt. Dieser Schnittstelleneinrichtung sind ein Register Reg als Verzögerungseinrichtung sowie ein Adressendecodierer DEC1 nachgeschaltet. In das Register Reg wird der Informationsteil eines über die Zubringerleitung E übertragenen Nachrichtenblockes aufgenommen. Der dem jeweiligen Nachrichtenblock zugehörige Blockkopf wird dagegen dem Adressendecodierer DEC1 zugeführt. Dieser decodiert die in dem zugeführten Blockkopf in Form einer virtuellen Kanalnummer VCI enthaltenen, die jeweilige virtuelle Verbindung bezeichnenden Angaben und stellt entsprechende Ausgangssignale bereit. Diese sind einem Umwerte-Speicher USP als Adressensignale zugeführt. Der Umwerte-Speicher USP weist für jede der auf der zugehörigen Zubringerleitung E möglichen virtuellen Verbindungen eine gesonderte Speicherzelle auf. Diese Speicherzellen sind nach Maßgabe der in Nachrichtenblöcken enthaltenen, von dem zuvor genannten Adressendecodierer DEC1 decodierten virtuellen Kanalnummern VCI ansteuerbar. In jeder der Speicherzellen sind, wie in FIG 2 schematisch dargestellt ist, eine virtuelle Kanalnummer VCI(neu), eine Zusatzkennung ZK sowie eine Wegeinformation A für die Weiterleitung der der jeweiligen virtuellen Verbindung zugehörigen Nachrichtenblöcke gespeichert. Diese drei Angaben bilden gemeinsam einen neuen Blockkopf, der, wie im folgenden noch erläutert werden wird, einem gerade in das Register Reg aufgenommenen Informationsteil eines Nachrichtenblockes vorangestellt wird. VCI(neu) stellt dabei diejenige virtuelle Kanalnummer dar, die für eine Weiterleitung eines Nachrichtenblockes für die jeweilige virtuelle Verbindung zu benutzen ist. Bei der Zusatzkennung ZK handelt es sich um die zuvor erwähnte Zusatzkennung, die für die jeweilige virtuelle Verbindung im Zuge des Verbindungsaufbaus festgelegt und jedem in die Behandlungseinrichtung BHE aufgenommenen Nachrichtenblock beigefügt wird. Die Form der Wegeinformation A ist von dem in der Koppelanordnung KA benutzten Übertragungsprinzip abhängig. Wird in dieser Koppelanordnung von dem bekannten "Self-Routing"-Prinzip Gebrauch gemacht, so stellt die Wegeinformation A eine "Self-Routing"-Information dar. Dagegen ist bei Anwendung des bekannten Umwerte-Prinzips in der Koppelanordnung KA durch die Wegeinformation A lediglich der für eine Übertragung zu benutzende Ausgang des der jeweiligen Behandlungseinrichtung BHE unmittelbar nachfolgenden Koppelvielfachs KV der Koppelanordnung KA bezeichnet.

Die gerade erwähnten, in den einzelnen Speicherzellen des Umwertespeichers gespeicherten Angaben werden von einer zentralen Steuereinrichtung der in FIG 1 dargestellten Blockvermittlungsanlage BVA im Zuge des Aufbaues von virtuellen Verbindungen festgelegt und einer in FIG 2 mit ST1 bezeichneten Steuereinrichtung zugeführt. Unter deren Steuerung erfolgt dann der Eintrag der erwähnten Angaben in die jeweils in Frage kommende Speicherzelle des Umwertespeichers USP.

Der Umwertespeicher USP ist über Datenausgänge mit ersten Eingängen einer von der Steuereinrichtung ST1 her steuerbaren Datenweiche DW1 verbunden. An zweite Eingänge ist dagegen das bereits erwähnte Register Reg angeschlossen. Diese Datenweiche DW1 steht über einen Parallel-Serien-Wandler P/S1 mit der in FIG 1 dargestellten Koppelanordnung KA in Verbindung.

Bei Auftreten eines Nachrichtenblockes auf der in FIG 2 mit E bezeichneten Zubringerleitung und damit bei einer Decodierung einer virtuellen Kanalnummer VCI durch den Adressendecodierer DEC1 wird eine dieser virtuellen Kanalnummer zugeordnete Speicherzelle des Umwertespeichers USP für die Abgabe eines darin gespeicherten neuen Blockkopfes angesteuert. Die zuvor erwähnte Datenweiche DW1 wird dabei durch die in FIG 2 dargestellte Steuereinrichtung ST1 so gesteuert, daß dem Parallel-Serien-Wandler P/S1 zunächst der von dem Umwertespeicher USP bereitgestellte Blockkopf und anschließend der in dem Register Reg gespeicherte Informationsteil bitgruppenweise zugeführt wird. Der auf diese Weise gebildete neue Nachrichtenblock wird schließlich nach einer Parallel-Serien-Wandlung der in FIG 1 dargestellten Koppelanordnung KA zugeführt.

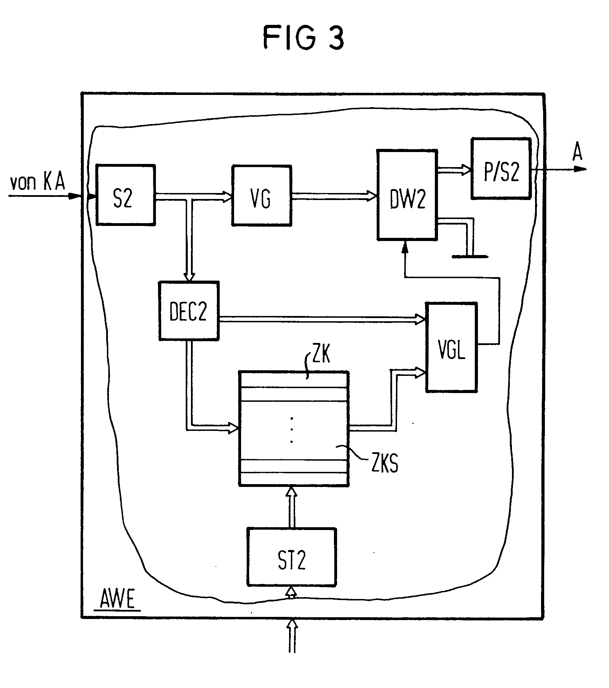

In FIG 3 ist ein möglicher Aufbau einer der in FIG 1 lediglich schematisch dargestellten Auswereteeinrichtungen AWE angegeben. Die über die Koppelanordnung KA der betreffenden Auswerteeinrichtung in serieller Form zugeführten Nachrichtenblöcke durchlaufen zunächst eine Schnittstelleineinrichtung S2, welche im wesentlichen für die Erkennung des Beginns von Nachrichtenblöcken und für deren oktettweise Parallelwandlung dient. Liegt ein solcher Nachrichtenblock vor, so wird dieser oktettweise einer verzögerungseinrichtung VG beispielsweise in Form einer Registeranordnung zugeführt. Außerdem wird ein Adressendecodierer DEC2 mit der in diesem Nachrichtenblock enthaltenenen virtuellen Kanalnummer VCI beaufschlagt. Dieser Adressendecodierer decodiert diese virtuelle Kanalnummer und gibt entsprechende Ausgangssignale ab, die als Adressensignale für die Ansteuerung eines eine Mehrzahl von Speicherzellen aufweisenden Zusatzkennungs-Speichers ZKS dienen. Diese Speicherzellen sind den virtuellen verbindungen, die über die mit der Auswerteeinrichtung AWE verbundene Abnehmerleitung verlaufen können, individuell zugeordnet. In jeder dieser Speicherzellen ist dabei eine Zusatzkennung ZK gespeichert, die der bereits oben erwähnten, für die jeweilige virtuelle verbindung in dem in FIG 2 dargestellten Umwertespeicher USP gespeicherten Zusatzkennung entspricht. Diese Zusatzkennung wird im Zuge des Aufbaus der jeweiligen virtuellen verbindung von der bereits oben erwähnten zentralen Steuereinrichtung einer in FIG 3 mit ST2 bezeichneten Steuereinrichtung zugeführt und unter deren Steuerung in die jeweils in Frage kommende Speicherzelle des Zusatzkennungsspeichers ZKS eingetragen.

Auf die zuvor erwähnte Ansteuerung des Zusatzkennungsspeichers ZKS durch den Adressendecodierer DEC2 hin wird die in der gerade angesteuerten Speicherzelle gespeicherte Zusatzkennung ZK einem ersten Eingang eines vergleichers VGL zugeführt. Ein zweiter Eingang dieses Vergleichers wird dagegen von dem Adressendecodierer DEC2 her über einen gesonderten Ausgang mit der Zusatzkennung beaufschlagt, die in dem Blockkopf des gerade in die Auswerteeinrichtung AWE aufgenommenen Nachrichtenblockes enthalten ist. Mit seinem Ausgang steht dieser Vergleicher mit einem Steuereingang einer Datenweiche DW2 in verbindung, deren erste Datenausgänge einem Parallel-Serien-Wandler P/S2 zugeführt sind. Dieser stellt die Schnittstelle zu einer in FIG 3 mit A bezeichneten Abnehmerleitung dar. Zweite Datenausgänge dieser Datenweiche DW2 sind dagegen beispielsweise auf Masse gelegt.

Bei einer Übereinstimmung der dem Vergleicher VGL gerade zugeführten Zusatzkennungen steuert dieser die Datenweiche DW2 derart, daß der von der Verzögerungseinrichtung VG abgegebene Nachrichtenblock über den Parallel-Serien-Wandler P/S2 an die mit A bezeichnete Abnehmerleitung weitergeleitet wird. Bei einer Nichtübereinstimmung der gerade miteinander verglichenen Zusatzkennungen steuert dagegen der Vergleicher die Datenweiche DW2 derart, daß der von der Verzögerungseinrichtung abgegebene Nachrichtenblock an die mit Masse verbundenen Datenausgänge der Datenweiche DW2 abgegeben und damit ausgesondert wird. Durch diese Steuerung der Datenweiche DW2 ist sichergestellt, daß an die zugehörige Abnehmerleitung lediglich über die in FIG 1 dargestellte Koppelanordnung KA fehlerfrei übertragene Nachrichtenblöcke weitergeleitet werden.

Die zuvor genannten, den einzelnen Nachrichtenblöcken virtueller Verbindungen beigefügten Zusatzkennungen können beliebig festgelegt sein. Im folgenden werden jedoch einige besonders einfach zu realisierende Möglichkeiten für die Bildung von Zusatzkennungen aufgezeigt. So kann beispielsweise als Zusatzkennung eine mit jedem Aufbau einer virtuellen Verbindung beispielsweise durch Inkrementierung fortlaufend vergebene Binärzahl benutzt werden. Eine zweite Möglichkeit besteht in der Benutzung einer in der betreffenden Blockvermittlungsanlage BVA generierten binären Zufallszahl. Weiterhin kann als Zusatzkennung eine binäre Leitungsnummer benutzt werden, die der in die jeweilige virtuelle Verbindung einbezogenen Zubringerleitung bzw. Abnehmerleitung innerhalb der Blockvermittlungsanlage zugeordnet ist. Schließlich kann eine Zusatzkennung auch aus der der jeweiligen Zubringerleitung bzw. Abnehmerleitung zugeordneten binären Leitungsnummer und einer die jeweilige virtuelle Verbindung bezeichnenden virtuellen Kanalnummer zusammengesetzt sein.

## Patentansprüche

1. Verfahren zum Verhindern des Fehlleitens von auf Zubringerleitungen (E1,..., En) im Zuge von virtuellen Verbindungen nach einem asynchronen Transfermodus übertragenen, jeweils einen die jeweilige virtuelle Verbindung bezeichnenden Blockkopf aufweisenden Nachrichtenblöcken über eine Blockvermittlungsanlage (BVA) zu mit dieser verbundenen Abnehmerleitungen (A1,..., An) hin,
**dadurch gekennzeichnet**,
daß von der Blockvermittlungsanlage her im Zuge des Aufbaus virtueller Verbindungen verbindungsindividuell eine Zusatzkennung festgelegt wird, welche den der jeweiligen virtuellen Verbindung zugehörigen Nachrichtenblöcken für deren Übertragung innerhalb der Blockvermittlungsanlage beigefügt wird und
daß nach einer solchen Übertragung Nachrichtenblöcke lediglich dann zu der für die jeweilige virtuelle Verbindung in Frage kommenden Abnehmerleitung weitergeleitet werden, wenn die den Nachrichtenblöcken jeweils beigefügte Zusatzkennung mit der für die jeweilige virtuelle Verbindung festgelegten Zusatzkennung übereinstimmt.

2. Verfahren nach Anspruch 1,
**dadurch gekennzeichnet**,
daß als Zusatzkennung eine mit jedem Aufbau einer virtuellen Verbindung fortlaufend vergebene Binärzahl benutzt wird.

3. Verfahren nach Anspruch 1,
**dadurch gekennzeichnet**,
daß als Zusatzkennung eine binäre Zufallszahl benutzt wird.

4. Verfahren nach Anspruch 1,
**dadurch gekennzeichnet**,
daß als Zusatzkennung eine der in die jeweilige virtuelle Verbindung einbezogenen Zubringerleitung zugeordnete binäre Leitungsnummer benutzt wird.

5. Verfahren nach Anspruch 4,
**dadurch gekennzeichnet**,
daß die Zusatzkennung aus der der jeweiligen Zubringerleitung zugeordneten binären Leitungsnummer und einer die jeweilige virtuelle Verbindung bezeichnenden virtuellen Kanalnummer zusammengesetzt ist.

6. Verfahren nach Anspruch 1,
**dadurch gekennzeichnet**,
daß als Zusatzkennung eine der in die jeweilige virtuelle Verbindung einbezogenen Abnehmerleitung zugeordnete binäre Leitungsnummer benutzt wird.

7. Verfahren nach Anspruch 6,
**dadurch gekennzeichnet**,
daß die Zusatzkennung aus der der jeweiligen Abnehmerleitung zugeordneten binären Leitungsnummer und einer die jeweilige virtuelle Verbindung bezeichnenden virtuellen Kanalnummer zusammengesetzt ist.

8. Schaltungsanordnung zum Verhindern des Fehlleitens von auf Zubringerleitungen (E1,..., En) im Zuge von virtuellen Verbindungen nach einem asynchronen Transfermodus übertragenen, jeweils einen die jeweilige virtuelle Verbindung bezeichnenden Blockkopf aufweisenden Nachrichtenblöcken über eine Blockvermittlungsanlage (BVA) zu mit dieser verbundenen Abnehmerleitungen (A1,..., An) hin,
**dadurch gekennzeichnet**,
daß jeder der Zubringerleitungen (E1,..., En) eine gesonderte Behandlungseinrichtung (BHE) zugeordnet ist, welche den über die jeweilige Zubringerleitung aufgenommenen Nachrichtenblöcken für deren Übertragung innerhalb der Blockvermittlungsanlage (BVA) jeweils eine für die jeweilige virtuelle Verbindung im Zuge des Verbindungsaufbaus festgelegte Zusatzkennung beifügt, und daß jeder der Abnehmerleitungen (A1,..., An) eine gesonderte Auswerteeinrichtung (AWE) zugeordnet ist, welche ihr zugeführte, innerhalb der Blockvermittlungsanlage übertragene Nachrichtenblöcke lediglich dann an die zugeordnete Abnehmerleitung weiterleitet, wenn die den Nachrichtenblöcken jeweils beigefügte Zusatzkennung mit der für die jeweilige virtuelle Verbindung festgelegten, der jeweiligen Auswerteeinrichtung zur Verfügung stehenden Zusatzkennung übereinstimmt.

9. Schaltungsanordnung nach Anspruch 8,
**dadurch gekennzeichnet**,
daß in den Behandlungseinrichtungen (BHE) und den Auswerteeinrichtungen (AWE) jeweils eine Speicheranordnung (USP, ZKS) mit einer Mehrzahl von Speicherzellen vorgesehen ist, in welchen die für die einzelnen virtuellen Verbindungen individuell festgelegten Zusatzkennungen gespeichert sind,
daß die Speicherzellen für eine Bereitstellung der in ihnen jeweils gespeicherten Zusatzkennung nach Maßgabe von die jeweilige virtuelle Verbindung bezeichnenden, in den Blockköpfen der Nachrichtenblöcke enthaltenen Angaben ansteuerbar sind
und daß mit der Speicheranordnung (ZKS) der jeweiligen Auswerteeinrichtung eine Vergleicheranordnung (VGL) verbunden ist,
welche die in einem Nachrichtenblock enthaltene Zusatzkennung mit der von der betreffenden Speicheranordnung gerade bereitgestellten Zusatzkennung vergleicht und bei einer Übereinstimmung der beiden miteinander verglichenen Zusatzkennungen das Weiterleiten des jeweiligen Nachrichtenblockes an die zugeordnete Abnehmerleitung steuert.

## Claims

1. Method for preventing misrouting of data blocks which are transmitted on incoming lines (E1,..., En) in the course of virtual connections in accordance with an asynchronous transfer mode and which have in each case a block header identifying the respective virtual connection via a block exchange (BVA) to outgoing lines (A1,..., An) connected thereto, characterized in that an additional identifier is defined connection-specifically by the block exchange in the course of establishing virtual connections, which additional identifier is appended to the data blocks associated with the respective virtual connections for their transmission within the block exchange, and in that after such a transmission, data blocks are only forwarded to the outgoing line in question for the respective virtual connection if the respective additional identifier appended to the data blocks matches the additional identifier defined for the respective virtual connection.

2. Method according to Claim 1, characterized in that a binary number serially assigned upon each establishment of a virtual connection is used as additional identifier.

3. Method according to Claim 1, characterized in that a random binary number is used as additional identifier.

4. Method according to Claim 1, characterized in that a binary line number assigned to the incoming line included in the respective virtual connection is used as additional identifier.

5. Method according to Claim 4, characterized in that the additional identifier is composed of the binary line number assigned to the respective incoming line and a virtual channel number identifying the respective virtual connection.

6. Method according to Claim 1, characterized in that a binary line number assigned to the outgoing line included in the respective virtual connection is used as additional identifier.

7. Method according to Claim 6, characterized in that the additional identifier is composed of the binary line number assigned to the respective outgoing line and a virtual channel number identifying the respective virtual connection.

8. Circuit arrangement for preventing misrouting of data blocks which are transmitted on incoming lines (E1,..., En) in the course of virtual connections in accordance with an asynchronous transfer mode and which have in each case a block header identifying the respective virtual connection via a block exchange (BVA) to outgoing lines (A1,..., An) connected thereto, characterized in that each of the incoming lines (E1,..., En) is assigned a separate handling device (BHE) which appends an additional identifier defined for the respective virtual connection in the course of connection establishment in each case to the data blocks received via the respective incoming line for their transmission within the block exchange (BVA), and in that each of the outgoing lines (A1,..., An) is assigned a separate evaluation device (AWE) which forwards data blocks transmitted within the block exchange and supplied to it to the assigned outgoing line only if the respective additional identifier appended to the data blocks matches the additional identifier defined for the respective virtual connection and available to the respective evaluation device.

9. Circuit arrangement according to Claim 8, characterized in that a memory arrangement (USP, ZKS) having a plurality of memory cells is provided in the handling devices (BHE) and the evaluation devices (AWE) in each case, in which arrangement the additional identifiers defined individually for the individual virtual connections are stored, in that the memory cells can be addressed to make available the additional identifier stored in them in each case in accordance with the specifications identifying the respective virtual connection contained in the block headers of the data blocks, and in that connected to the memory arrangement (ZKS) of the respective evaluation device is a comparator arrangement (VGL) which compares the additional identifier contained in one data block with the additional identifier just made available by the respective memory arrangement, and if the two additional identifiers compared with one another match controls the forwarding of the respective data block to the assigned outgoing line.

## Revendications

1. Procédé pour empêcher l'acheminement erroné de blocs d'informations qui sont transmis dans des lignes d'accès (E1,...,En), lors de liaisons virtuelles selon un mode de transfert asynchrone, et comportant respectivement une tête de bloc qui désigne la liaison virtuelle respective, par l'intermédiaire d'une installation de commutation de blocs (BVA) en direction de lignes de lignes d'abonnés ou d'usagers (A1,...,An) reliées à cette installation, caractérisé par le fait qu'à partir de l'installation de commutation de blocs, au cours de l'établissement de liaisons virtuelles, est établi, pour chaque liaison, un indicatif supplémentaire, qui est adjoint aux blocs d'informations qui sont associés à la liaison virtuelle respective, pour la transmission de ces blocs à l'intérieur de l'installation de commutation de blocs, et qu'après une telle transmission, des blocs d'informations sont alors retransmis simplement à la ligne d'abonné ou d'usager arrivante pour la liaison virtuelle respective en question, lorsque l'indicatif supplémentaire, qui est adjoint respectivement aux blocs d'informations, coïncide avec l'indicatif supplémentaire, fixé pour la liaison virtuelle concernée.

2. Procédé suivant la revendication 1, caractérisé par le fait qu'on utilise, comme indicatif supplémentaire, un nombre binaire fourni en permanence pour chaque établissement d'une liaison virtuelle.

3. Procédé suivant la revendication 1, caractérisé par le fait qu'on utilise comme indicatif supplémentaire un nombre aléatoire binaire.

4. Procédé suivant la revendication 4, caractérisé par le fait qu'on utilise comme indicatif supplémentaire un numéro de ligne binaire associé à la ligne d'accès introduite dans la liaison virtuelle respective.

5. Procédé suivant la revendication 4, caractérisé par le fait que l'indicatif supplémentaire est constitué par le numéro de ligne binaire, qui est associé à la ligne d'accès respective, et par un numéro virtuel de canal, qui désigne la liaison virtuelle respective.

6. Procédé suivant la revendication 1, caractérisé par le fait qu'on utilise comme indicatif supplémentaire un numéro de ligne binaire, qui est associé à la ligne d'abonné insérée dans la liaison virtuelle respective.

7. Procédé suivant la revendication 6, caractérisé par le fait que l'indicatif supplémentaire est constitué par le numéro de ligne binaire, qui est associé à la ligne d'abonné respective, et un numéro virtuel de canal, qui désigne la liaison virtuelle respective.

8. Montage pour éviter l'acheminement erroné de blocs d'informations, qui sont transmis dans des lignes d'accès (E1,...,En) lors de liaisons virtuelles selon un mode de transfert asynchrone, et comportant respectivement une tête de bloc, qui désigne la liaison virtuelle respective, par l'intermédiaire d'une installation de commutation de blocs (BVA) en direction de lignes de lignes d'abonnés ou d'usagers (A1,...,An) reliées à cette installation,
caractérisé par le fait
qu'à chacune des lignes d'accès (E1,...,En) est associé un dispositif de traitement particulier (BHE), qui adjoint respectivement aux blocs d'informations reçus par l'intermédiaire de la ligne d'accès respective, pour la transmission de ces blocs à l'intérieur de l'installation de commutation de blocs (BVA), un indicatif supplémentaire, qui est fixé pour la liaison virtuelle individuelle respective au cours de l'établissement de la liaison, et qu'à chacune des lignes d'abonné ou d'usagers (A1,...,An) est associé un dispositif particulier d'évaluation (AWE), qui retransmet des blocs d'informations, qui lui sont envoyés et qui sont transmis à l'intérieur de l'installation de commutation de blocs, à la ligne d'abonné ou d'usager associée uniquement lorsque l'indicatif supplémentaire, adjoint respectivement aux blocs d'informations, coïncide avec l'indicatif supplémentaire, qui est fixé pour la liaison virtuelle respective et qui est disponible pour le dispositif d'évaluation respectif.

9. Montage suivant la revendication 8, caractérisé par le fait que dans les dispositifs de traitement (BHE) et les dispositifs d'évaluation (AWE) est prévu respectivement un dispositif de mémoire (USP,ZKS), qui comporte une multiplicité de cellules de mémoire, dans lesquelles sont mémorisées les indicatifs supplémentaires fixés individuellement pour les différentes liaison virtuelles,
que les cellules de mémoire peuvent être commandées, pour une préparation de l'indicatif supplémentaire, qui est respectivement mémorisé en elle, en fonction d'indications qui désignent la liaison virtuelle respective et qui sont contenues dans les têtes des blocs d'informations, et
qu'au dispositif de mémoire (ZKS) du dispositif d'évaluation respectif est raccordé un dispositif comparateur (VGL), qui compare l'indicatif supplémentaire, qui est contenu dans le bloc d'informations et possède l'indicatif supplémentaire préparé précisément par le dispositif de mémoire concerné, et, en cas de coïncidence entre les deux indicatifs supplémentaires comparés entre eux, commande la retransmission du bloc d'informations respectif à la ligne d'abonné ou d'usager associée.
